# EUROPEAN PATENT APPLICATION

(11) **EP 3 944 662 A1**
(43) Date of publication of application: **26.01.2022**
(21) Application number: 19920698.8
(22) Date of filing: 22.03.2019
(51) Int. Cl.: H04W 28/04, H04W 72/04

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); ZHANG, Xiaohong, Beijing 100190 (CN); GUO, Shaozhen, Beijing 100190 (CN); HOU, Xiaolin, Beijing 100190 (CN)
(74) Representative: Hoffmann Eitle
(86) International application number: PCT/JP2019/012219
(87) International publication number: WO 2020/194404

(57) **Abstract**

A user terminal includes a transmitting/receiving section that receives or transmits a transport block including a plurality of code block groups (CBGs) at a given occasion in a given cycle by using a downlink shared channel or an uplink shared channel, and a control section that controls reception or retransmission of at least one CBG to be re-scheduled among the plurality of CBGs independently from the given occasion, in a case that downlink control information including a given field value indicating the at least one CBG is detected. This can appropriately control retransmission in a unit smaller than a TB.

## Description

### Technical Field

The present disclosure relates to a user terminal and a radio communication method in next-generation mobile communication systems.

### Background Art

In UMTS (Universal Mobile Telecommunications System) networks, the specifications of LTE (Long-Term Evolution) have been drafted for the purpose of further increasing high speed data rates, providing lower latency and so on (see Non-Patent Literature 1). In addition, for the purpose of further high capacity, advancement and the like of the LTE (3GPP (Third Generation Partnership Project) Rel. (Release) 8 and Rel. 9), the specifications of LTE-Advanced (3GPP Rel. 10 to Rel. 14) have been drafted.

Successor systems of LTE (e.g., referred to as "5G (5th generation mobile communication system)," "5G+ (plus)," "NR (New Radio)," "3GPP release (Rel.) 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication system (hereinafter, also referred to as NR), a dynamic grant-based transmission and a transmission without dynamic grant (for example, initial transmission) are under study.

In Rel. 15, in a case that an initial transmission of a transport block (TB) is performed at a given occasion in a given cycle without dynamic grant, a retransmission in a unit smaller than the TB (for example, code block group (CBG)) is not allowed.

For this reason, even in a case that part of the CBG in the TB is failed to be decoded, not only the part of the CBG failed to be decoded but also entire the TB need to be retransmitted. Thus, an overhead due to retransmission possibly increases.

As such, an object of the present disclosure is to provide a user terminal and a radio communication method capable of appropriately controlling a retransmission in a unit smaller than a TB in a case that an initial transmission of the TB is performed at a given occasion in a given cycle.

### Solution to Problem

A user terminal according to an aspect of the present disclosure includes: a transmitting/receiving section that receives or transmits a transport block including a plurality of code block groups (CBGs) at a given occasion in a given cycle by using a downlink shared channel or an uplink shared channel; and a control section that controls reception or retransmission of at least one CBG to be re-scheduled among the plurality of CBGs independently from the given occasion, in a case that downlink control information including a given field value indicating the at least one CBG is detected.

### Advantageous Effects of Invention

According to an aspect of the present disclosure, it is possible to appropriately control a retransmission in a unit smaller than a TB in a case that an initial transmission of the TB is performed at a given occasion in a given cycle.

### Brief Description of Drawings

FIG. 1 is a diagram to show an example of a CBG based retransmission according to a first aspect;
FIG. 2 is a diagram to show a still another example of an HARQ-ACK feedback according to the first aspect;
FIG. 3 is a diagram to show an example of a CBG based retransmission according to a second aspect;
FIG. 4 is a diagram to show an example of a schematic structure of a radio communication system according to one embodiment;
FIG. 5 is a diagram to show an example of a structure of a base station according to one embodiment;
FIG. 6 is a diagram to show an example of a structure of a user terminal according to one embodiment; and
FIG. 7 is a diagram to show an example of a hardware structure of the base station and the user terminal according to one embodiment.

### Description of Embodiments

### (Dynamic Grant-Based Transmission and Transmission Without Dynamic Grant)

For NR, dynamic grant-based transmission and transmission without dynamic grant are under study.

The dynamic grant-based transmission is a UL transmission (for example, transmission on an uplink shared channel (for example, Physical Uplink Shared Channel (PUSCH))) or a DL transmission (for example, transmission on a downlink shared channel (for example, Physical Downlink Shared Channel (PDSCH))) based on downlink control information (DCI). The DCI is also referred to as a dynamic grant or the like.

Note that the DCI used for PUSCH scheduling (for example, DCI format 0_0 or 0_1) is also referred as a UL grant or the like. The DCI used for PDSCH scheduling (for example, DCI format 1_0 or 1_1) is also referred to as a DL assignment or the like.

To (or in) the DCI (dynamic grant), cyclic redundancy check (CRC) bits scrambled with a given RNTI (for example, a cell-radio network temporary identifier (C-RNTI)) may be added (or included) (the DCI may be CRC-scrambled).

The transmission without dynamic grant is a UL transmission (for example, PUSCH transmission) or a DL transmission (for example, PDSCH transmission) periodically performed based on configuration information (also referred to as a configured grant or the like) by a higher layer parameter (for example, radio resource control (RRC) parameter).

The UL transmission without dynamic grant is also referred to as a configured grant-based transmission, a UL transmission with configured grant, a UL grant-free transmission, configured scheduling, or the like. The UL transmission may be controlled based on configuration information configured by a higher layer (configured grant configuration information (for example, Radio Resource Control (RRC)) layer information element (IE) (RRC IE) "ConfiguredGrantConfig").

The DL transmission without dynamic grant is also referred to as a semi-persistent scheduling (SPS, DL SPS), a configured DL assignment, or the like. The DL transmission may be controlled based on configuration information configured by the higher layer (SPS configuration information (for example, RRC IE "SPS-Config")).

In the DL transmission or UL transmission without dynamic grant, low latency communication can be expected to be realized because a UL resource is already assigned to the UE, and the UE can use the configured resource to autonomously perform UL transmission.

In the DL transmission or UL transmission without dynamic grant, when the above configuration information (for example, configured grant configuration information or SPS configuration information) is received, the DL transmission or UL transmission may be started. In this case, activation or release (deactivation) of the DL transmission or UL transmission is not controlled by the DCI (downlink control channel (Physical Downlink Control Channel (PDCCH))). The DL transmission or the UL transmission may be referred to as Type 1, configured grant Type 1, or the like.

Alternatively, in the DL transmission or UL transmission without dynamic grant, in a case that the above configuration information is received by way of the DCI, the activation or the release may be controlled based on the DCI. The DL transmission or the UL transmission may be referred to as Type 2, configured grant Type 2, or the like.

The DCI for activation or release may be CRC-scrambled with a given RNTI different from the dynamic grant (for example, configured scheduling RNTI (CS-RNTI)).

The configuration information (for example, configured grant configuration information or SPS configuration information) may include at least one of the following.
- Information indicating a cycle (for example, periodicity, semiPersistSchedIntervalDL),
- Information indicating the number of HARQ processes (for example, nrofHARQ-Processes, numberOfConfSPS-Processes),
- Information related to whether to apply frequency hopping (for example, frequencyHopping),
- Information related to demodulation reference signal (DMRS),
- Table information used to determine a modulation and coding scheme (MCS) (for example, MCS table (mcs-Table)),
- Information related to repetition transmission (for example, information indicating the number of repetitions (repK), information indicating a redundancy version (repK-RV)),
- Information related to a given timer (for example, configured grant timer (configuredGrantTimer)),
- Information related to a time domain offset,
- Information related to assignment of a time domain resource (for example, one or more symbols) (time domain resource assignment),
- Information related to assignment of a frequency domain resource (for example, one or more physical resource blocks (PRBs) (also referred to as resource blocks (RBs))) (frequency domain resource assignment),
- Information related to an MCS (for example, MCS index),
- Information indicating an HARQ process (for example, HARQ process number (HPN), HARQ process ID),
- Information related to DMRS antenna port or sequence initialization,
- Identifier of a sounding reference signal (SRS) resource,
- Information related to at least one of a modulation order, a target coding rate, and a TB size (TBS),
- Information indicating a frequency offset used for the frequency hopping,
- Information related to an uplink control channel (for example, Physical Uplink Control Channel) resource (for example, PUCCH resource) used for an HARQ-ACK transmission (for example, n1PUCCH-AN) .

In a case of Type 1, at least one of parameters included in the DL assignment (for example, DCI format 1_0 or 1_1) or the UL grant (for example, DCI format 0_0 or 0_1) may be included in the above configuration information.

In a case of Type 2, at least a part of the parameters in the above configuration information may be included in the DCI for activation. In the case of Type 2, at least one of the DCI for activation and the DCI for release may include at least one of the following pieces of information.
- Information related to time domain resource assignment,
- Information related to frequency domain resource assignment,
- Information related to an MCS (for example, MCS index),
- Information indicating an HARQ process,
- Information indicating a redundancy version,
- Information related to DL assignment,
- Information related to a PUCCH resource,
- Information related to a timing to feed back (transmit) transmission confirmation information (which may be referred to as a Hybrid Automatic Repeat reQuest ACKnowledgement (HARQ-ACK), an ACK/NACK, or the like) (for example, PDSCH-HARQ-ACK feedback timing identifier (PDSCH-to-HARQ_feedback timing indicator)),
- Information related to a carrier (for example, carrier indicator (CI)),
- Information related to a bandwidth part (BWP) (for example, bandwidth part indicator (BI)),
- New data indicator (NDI).

Here, in the dynamic grant-based DL transmission or UL transmission, transmission or retransmission in a unit smaller than the transport block (TB) is supported. The unit may be a group including one or a plurality of code blocks (CBs) (code block group (CBG)) constituting the TB. Note that the TB may be referred to as a codeword (Code Word (CW)).

For example, in the dynamic grant-based DL transmission, an HARQ-ACK in response to a PDSCH may be fed back for each CBG in the TB transmitted on the PDSCH. A base station may control a retransmission of each CBG via the PDSCH, based on the HARQ-ACK for each CBG. Specifically, the UE may control the retransmission of each CBG via the PDSCH, based on information indicating the CBG to be retransmitted (for example, DCI including a CBG transmission information (CBGTI) field) (for example, DCI format 1_0 or 1_1).

For example, in the dynamic grant-based UL transmission, retransmission of a TB initial-transmitted on a PUSCH may be controlled for each CBG. Specifically, the UE may control the retransmission of each CBG via the PUSCH, based on information indicating the CBG to be retransmitted (for example, DCI including a CBGTI field) (for example, DCI format 0_0 or 0_1).

The UE, in a case of being given information indicating CBG based transmission (CBG transmission information, for example, an RRC IE *"PDSCH-CodeBlockGroupTransmission"* or "PUSCH-CodeBlockGroupTransmission"), may be configured with transmission (or retransmission) of each CBG. The transmission of each CBG may be configured per a serving cell (also referred to as a carrier, a cell, a component carrier (CC), and the like).

The maximum number of CBGs per TB may be given by the higher layer parameter (for example, an RRC IE "maxCodeBlockGroupsPerTransportBlock") .

As described above, in the dynamic grant-based DL transmission or UL transmission, the retransmission may be controlled for each TB, or the retransmission may be controlled for each CBG. In the case that the retransmission is controlled for each CBG, retransmission of the CBG successfully decoded can be omitted, and thus, the overhead can be reduced as compared to the TB based retransmission.

On the other hand, in Rel. 15, in a case that an initial transmission of a TB is performed at a given occasion in a given cycle without dynamic grant, a retransmission in a unit smaller than the TB (for example, CBG) is not allowed. In Rel. 15, even in a serving cell configured with the CBG based transmission, a retransmission of the DL transmission or UL transmission without dynamic grant is performed on the TB basis.

However, as described above, in the TB based retransmission, not only the CBG failed to be decoded but also the CBG successfully decoded are retransmitted. For this reason, also in the DL transmission or UL transmission without dynamic grant, the CBG based retransmission is desired to be supported.

As such, the inventors of the present invention studied a method for appropriately controlling a retransmission in a unit (for example, CBG) smaller than a TB in the case that an initial transmission of the TB without dynamic grant is performed at a given occasion in a given cycle, and obtained the present invention.

Hereinafter, embodiments according to the present disclosure will be described in detail with reference to the drawings.

Note that in the present disclosure, the DL transmission without dynamic grant is also referred as a "SPS PDSCH," but the DL transmission is not limited to be referred to by such wording and may be referred to as a configured grant-based transmission, a DL transmission with configured grant, configured scheduling, an SPS transmission, a PDSCH, or the like. A given occasion in a given cycle used for the UE to receive or for the base station to transmit an SPS PDSCH may be expressed in other words with an SPS occasion, a DL SPS occasion, a reception occasion, a reception period, an SPS transmission occasion, a transmission occasion, a given period, a given timing, a cycle, or the like.

In the present disclosure, the UL transmission without dynamic grant is also referred to as a "configured grant PUSCH," but the UL transmission is not limited to be referred to by such wording and may be referred to as a UL SPS or an SPS, a configured grant transmission, or the like. A given occasion in a given cycle used for the UE to transmit or for the base station to receive a configured grant PUSCH may be expressed in other words with a transmission occasion, a transmission period, a reception occasion, a given period, a given timing, a cycle, or the like.

In the present disclosure, as for the DL transmission without dynamic grant, an initial transmission of a TB is to be performed at an SPS occasion in a given cycle without a DL assignment (which may be performed based on the DCI for activation), and a retransmission of at least part of the TB may be performed (scheduled) based on a DL assignment (for example, DCI format 1_1).

In the present disclosure, as for the UL transmission without dynamic grant, an initial transmission of a TB is to be performed at a transmission occasion in a given cycle without a UL grant (which may be performed based on the DCI for activation), and a retransmission of at least part of the TB may be performed (scheduled) based on a UL grant (for example, DCI format 0_1).

In the present disclosure, a description is given using a CBG as an example of a unit smaller than a TB, but a unit other than the CBG (for example, a CB) may be used so long as the unit is smaller than the TB.

### (First Aspect)

In a first aspect, a CBG based retransmission for SPS PDSCH will be described.

In the first aspect, the UE may receive information indicating a CBG based transmission for an SPS PDSCH (CBG transmission information, for example, an RRC IE *"PDSCH-CodeBlockGroupTransmission"*)*.* The CBG transmission information may be included in the above SPS configuration information. Configurations of the CBG transmission information for the SPS PDSCH and a PDSCH with dynamic grant may be configured by different RRC parameters.

The UE may be configured with a CBG based transmission in a case of receiving the above CBG transmission information. The CBG based transmission may be configured for one serving cell or one bandwidth part (BWP).

In a case of receiving a TB including one or more CBGs via an SPS PDSCH configured with a CBG based transmission, the UE may generate an HARQ-ACK for each CBG. The UE may feed back (transmit) an HARQ-ACK codebook including the HARQ-ACK for each CBG by using a PUCCH or a PUSCH. Note that UE may assume that all CBGs in the TB are included at an initial transmission.

The base station may control a retransmission of each CBG, based on the HARQ-ACK for each CBG. Specifically, the base station may transmit DCI (for example, DCI format 1_1) including the information indicating the CBG to be retransmitted (CBG information, for example, a CBGTI field) to schedule the CBG retransmission via the PDSCH by way of the DCI.

The CBG information may be, for example, a bitmap in which each bit corresponds to one CBG. A size of the bitmap (the number of bits) may be determined based on at least one of the maximum number of CBGs per one TB, the number of TBs (CWs) transmitted at one SPS occasion, and the number of HARQ processes transmitted at one SPS occasion.

The DCI may be CRC-scrambled with a given RNTI (for example, CS-RNTI) different from a dynamic grant. The DCI may be, for example, DCI format 1_1.

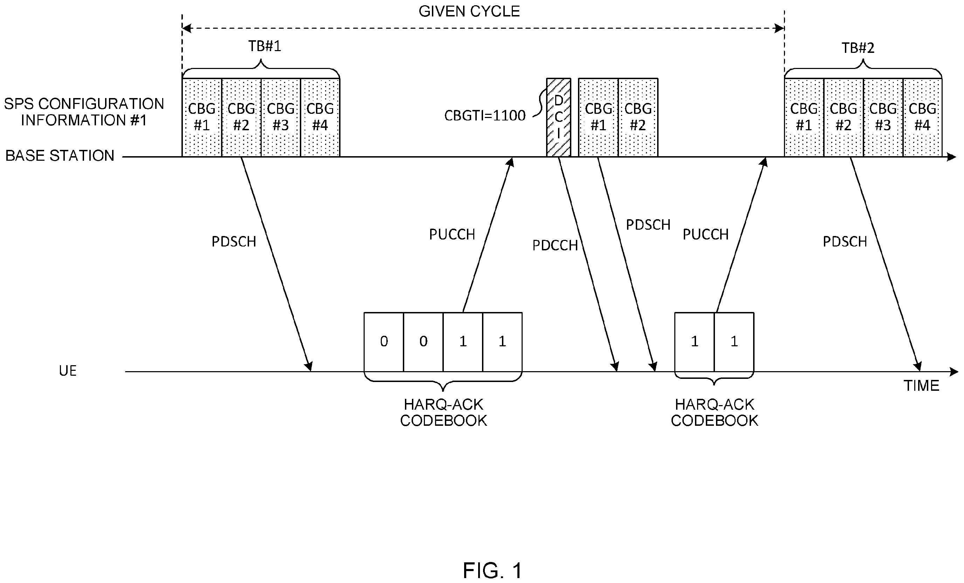

FIG. 1 is a diagram to show an example of the CBG based retransmission according to the first aspect. In FIG. 1, it is assumed that a reception of a PDSCH at an SPS occasion in a given cycle is configured by SPS configuration information #1. In FIG. 1, it is assumed that the SPS PDSCH transmission in the given cycle is activated by way of the DCI for activation.

Note that in a case that the DCI CRC-scrambled with the given RNTI (for example, CS-RNTI) satisfies a given condition, the UE may recognize the DCI (for example, DCI format 1_1) as the DCI for activation and start the reception of the PDSCH at each SPS occasion using a time domain resource and frequency domain resource specified by the DCI. The given condition may be the following, for example.
- A NDI field in the DCI is 0,
- All bits of an HPN field in the DCI are 0, and
- All bits of an RV field in the DCI are 0.

For example, FIG. 1 shows an example in which the number of CBGs per one TB is configured to 4. Note that FIG. 1 is merely an example, and the number of CBGs per one TB, the number of TBs per one SPS occasion, and the like are not limited to those shown in the figure.

For example, in FIG. 1, the UE receives TB #1 including CBGs #1 to #4 at a given SPS occasion via a PDSCH. The UE generates an HARQ-ACK corresponding to each of CBGs #1 to #4, based on a result of decoding each of CBGs #1 to #4.

For example, in FIG. 1, the UE fails to decode CBGs #1 and #2, and successfully decodes CBGs #3 and #4. Thus, the UE may generate an HARQ-ACK codebook (for example, 0011) including 4 bits indicating NACK for CBGs #1 and #2 and ACK for CBGs #3 and #4. The UE may transmit the HARQ-ACK codebook by using a PUCCH or a PUSCH.

The base station may control a retransmission of each CBG in TB #1, based on the HARQ-ACK codebook from the UE. In FIG. 1, the base station detects the NACK for CBGs #1 and #2, and thus, may transmit DCI scheduling retransmissions of CBGs #1 and #2 (for example, DCI format) via a PDCCH. The DCI may be CRC-scrambled with a given RNTI (for example, CS-RNTI).

The UE may monitor a given search space set to detect the DCI CRC-scrambled with the given RNTI (for example, CS-RNTI) (for example, DCI format 1_1).

The given search space set may include one or more search spaces. The given search space set may be at least one of a common search space (CSS) set and a UE-specific search space (USS) set.

A value of a given field in the DCI (for example, a CBGTI field) may indicate a CBG to be retransmitted in TB #1. For example, in FIG. 1, the given field is a four-bit bitmap "1100" corresponding to four CBGs #1 to #4 in TB #1. For example, a value "1" of a bit in the bitmap may indicate that the CBG corresponding to the bit is transmitted. On the other hand, a value "0" of the bit may indicate that the CBG corresponding to the bit is not transmitted.

The DCI may include a given field (for example, a CBG flushing out information (CBGFI) field) indicating whether or not the retransmitted CBG is combinable with the same CBG previously transmitted. For example, each bit in the given field may correspond to a CBG, and a value "0" of a bit may indicate that the CBG corresponding to the bit is not combinable with the previously received CBG (or the CBG corresponding to the bit is corrupted). On the other hand, a value "1" of a bit may indicate that the CBG corresponding to the bit is combinable with the previously received CBG.

The DCI may be CRC-scrambled with an RNTI (for example, CS-RNTI) the same as for the DCI for activation. In this case, the UE may recognize the DCI as DCI scheduling retransmissions of one or more CBGs (in other words, as being different from the DCI for activation), based on values of one or more given fields in the DCI (for example, values of the NDI field, the HPN field, and the RV field).

The value (HPN) of the HPN field in the DCI scheduling the retransmissions of one or more CBGs may indicate an HPN the same as that at the initial transmission. The value of the RV field in the DCI indicates an RV applied to the CBG to be retransmitted, and at least one bit of the RV field may be set to other than 0. A value of at least one bit of the NDI field in the DCI may be set to other than 0.

In FIG. 1, the UE may recognize that CBGs #1 and #2 in TB #1 are retransmitted, based on the value "1100" of the CBGTI field in the DCI to control reception processing (for example, at least one of demodulation, decode, and combination based on the CBFI field, and so on) of the retransmitted CBGs #1 and #2.

The UE may generate an HARQ-ACK corresponding to each of CBGs #1 and #2, based on a result of decoding CBGs #1 and #2. For example, in FIG. 1, the UE successfully decodes retransmitted CBGs #1 and #2, and thus, the UE may generate an HARQ-ACK codebook (for example, 11) including two bits indicating ACK for CBGs #1 and #2, and feed back the generated HARQ-ACK codebook using a PUCCH (or PUSCH).

As shown in FIG. 1, in a case that ACK for all CBGs #1 to #4 in TB #1 are fed back until the next SPS occasion, the base station may perform an initial transmission of TB #2 different from TB #1 at the next SPS occasion by using the HARQ process the same as that at the previous SPS occasion.

Note that in a case that ACK for all CBGs #1 to #4 in TB #1 are not fed back until the next SPS occasion, the base station may perform an initial transmission of TB #2 different from TB #1 at the next SPS occasion by using the HARQ process different from that at the previous SPS occasion.

Alternatively, an HARQ process ID of data to be transmitted may be determined based on time information of SPS occasion (for example, one or more pieces of information of a symbol index, a slot number in a frame, a subframe number in a frame, and a frame number). The HARQ process ID assigned at the next SPS occasion is determined based on the time information of the next SPS occasion.

### <HARQ-ACK Codebook>

Here, the HARQ-ACK codebook used for the HARQ-ACK feedback for each CBG will be described.

The HARQ-ACK codebook may be configured to include a bit for HARQ-ACK in a unit of at least one of a time domain (for example, slot), a frequency domain (for example, component carrier (CC)), a spatial domain (for example, layer), a transport block (TB), and a given unit constituting a TB (for example, CBG). Note that the CC is also referred to as a cell, a serving cell, a carrier, or the like. The bit is also referred to as an HARQ-ACK bit, HARQ-ACK information or HARQ-ACK information bit, or the like.

The HARQ-ACK codebook is also referred to as a PDSCH-HARQ-ACK codebook (pdsch-HARQ-ACK-Codebook), a codebook, an HARQ codebook, an HARQ-ACK size, or the like.

The number of bits included in (or size of) the HARQ-ACK codebook and the like may be semi-statically or dynamically determined. The HARQ-ACK codebook the size of which is semi-statically determined is also referred to as a semi-static HARQ-ACK codebook, a type-1 HARQ-ACK codebook, a semi-static codebook, a first type codebook, or the like. The HARQ-ACK codebook the size of which is dynamically determined is also referred to as a dynamic HARQ-ACK codebook, a type-2 HARQ-ACK codebook, a dynamic codebook, a second type codebook, or the like.

### «Semi-Static HARQ-ACK Codebook»

In the semi-static HARQ-ACK codebook (the first type codebook), an HARQ-ACK for each CBG in response to an SPS PDSCH (CBG level HARQ-ACK) may be placed similarly to the time domain resource assignment. A placed position of the HARQ-ACK for each CBG in response to the SPS PDSCH in the semi-static HARQ-ACK codebook may be similar to a placed position of an HARQ-ACK for each TB in response to the SPS PDSCH.

Specifically, the UE may determine the position of the HARQ-ACK for each CBG in the semi-static HARQ-ACK codebook firstly in the frequency domain and later in the time domain.

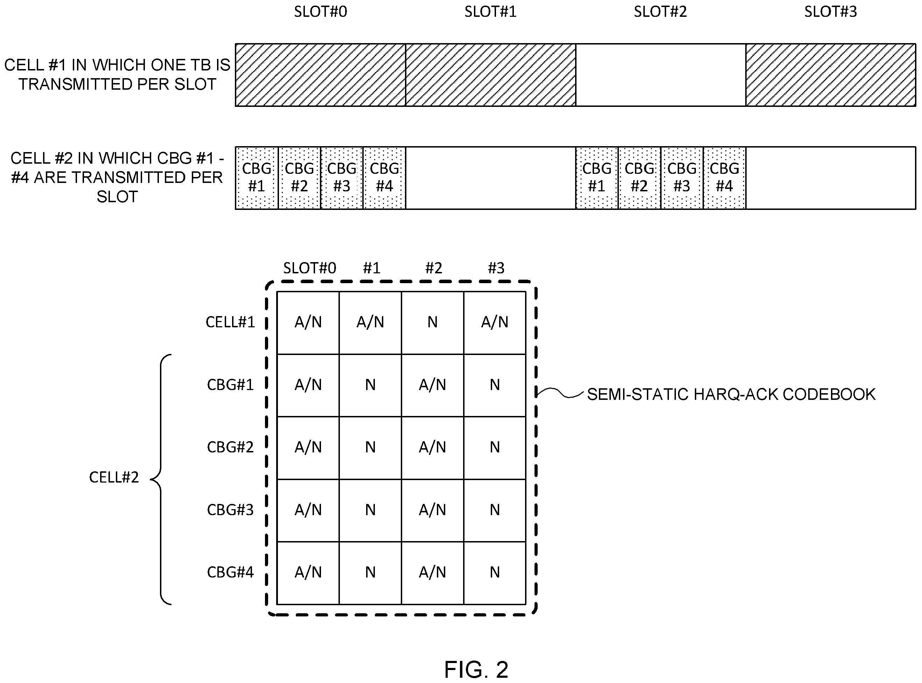

FIG. 2 is a diagram to show an example of the semi-static HARQ-ACK codebook according to the first aspect. In FIG. 2, it is assumed that a given range (also referred to as an HARQ-ACK window, a given window, or the like) to feed back an HARQ-ACK in the same HARQ-ACK codebook is configured in a given number of slots (for example, slots #0 to #3) in the time domain and a given number of cells (for example, cells #1 and #2) in the frequency domain.

For example, in FIG. 2, a PDSCH is scheduled in cell #1 by a dynamic grant (DL assignment). In cell #1, a TB based transmission (retransmission) is performed.

In FIG. 2, in cell #2, an SPS PDSCH configured by the SPS configuration information is transmitted in a given cycle. In cell #2, a CBG based transmission (retransmission) is performed.

The UE may determine the size of the semi-static HARQ-ACK codebook, based on at least one of the numbers of slots and cells in the above HARQ-ACK window, the number of CBGs per TB, and the number of TBs per one slot. For example, in FIG. 2, the size of the semi-static HARQ-ACK codebook may be determined as 20 bits, based on four slots and two cells in the HARQ-ACK window, the number of TBs in cell #1 per one slot that is one, and the number of CBGs in cell #2 per TB that is four.

As shown in FIG. 2, a position (order) of each HARQ-ACK bit in the semi-static HARQ-ACK codebook may be defined based on at least one of an index of the slot, an index of the cell, an index of the TB, and an index of the CBG. For example, in FIG. 2, each HARQ-ACK bit in the semi-static HARQ-ACK codebook is placed in order of lower CC index, in ascending order from a lower cell index, or in ascending order from a lower CBG index.

As shown in FIG. 2, the semi-static HARQ-ACK codebook includes also an HARQ-ACK bit corresponding to a slot in which transmission of a PDSCH or SPS PDSCH by a dynamic grant is not performed. For example, in FIG. 2, a DL PDSCH is not transmitted in cell #2 in slot #1, but the semi-static HARQ-ACK codebook includes bits (N) indicating NACK for CBGs #1 to #4 for the DL PDSCH.

### <<Dynamic HARQ-ACK Codebook>>

In the dynamic HARQ-ACK codebook (the second type codebook), an HARQ-ACK for each CBG in response to an SPS PDSCH (CBG level HARQ-ACK) may be placed after an HARQ-ACK in response to the PDSCH by the dynamic grant. A placed position of the HARQ-ACK for each CBG in response to the SPS PDSCH in the dynamic HARQ-ACK codebook may be similar to a placed position of an HARQ-ACK for each TB in response to the SPS PDSCH.

Specifically, the UE may determine the position of the HARQ-ACK for each CBG in the dynamic HARQ-ACK codebook depending on whether the HARQ-ACK is in response to the PDSCH or SPS PDSCH by the dynamic grant.

The dynamic HARQ-ACK codebook may include a subcodebook containing an HARQ-ACK for each TB (TB based subcodebook) and a subcodebook (CBG based subcodebook) containing an HARQ-ACK for each CBG. In the dynamic HARQ-ACK codebook, the CBG based subcodebook may be coupled after the TB based subcodebook.

The UE may place, in the CBG based subcodebook, forward the HARQ-ACK for each CBG in response to the PDSCH by the dynamic grant in the above HARQ-ACK window, and backward the HARQ-ACK for each CBG in response to the SPS PDSCH in the HARQ-ACK window.

According to the first aspect described above, the retransmission based on a unit (for example, CBG) smaller than a TB for the SPS PDSCH can be appropriately controlled.

### (Second Aspect)

In a second aspect, a CBG based retransmission for configured grant PUSCH will be described.

In the second aspect, the UE may receive information indicating a CBG based transmission for a configured grant PUSCH (CBG transmission information, for example, an RRC IE *"PUSCH-CodeBlockGroupTransmission"*)*.* The CBG transmission information may be included in PUSCH parameter configuration information (for example, an RRC IE "PUSCH-ServingCellConfig"). Configurations of the CBG transmission information for the configured grant PUSCH and the PDSCH with dynamic grant may be configured by different RRC parameters.

The UE may be configured with a CBG based transmission for the configured grant PUSCH in a case of receiving the above CBG transmission information. The CBG based transmission may be configured for one serving cell or one BWP.

In a case of transmitting a TB including one or more CBGs via the PUSCH configured with the CBG based transmission, the UE may not expect a feedback of an HARQ-ACK for each CBG from the base station to the UE. Note that UE may perform transmission including all CBGs in the TB at an initial transmission.

In a case that a given timer (for example, configured grant timer (configuredgrantTimer)) expires, the UE may assume that the TB is correctively decoded by the base station when the DCI scheduling retransmission (re-scheduling) of at least part of the TB (for example, one or more CBGs in the TB) is not detected.

The base station may control a retransmission of each CBG, based on a result of decoding each CBG transmitted form the UE via the configured grant PUSCH. Specifically, the base station may transmit DCI (for example, DCI format 0_1) including the information indicating the CBG to be retransmitted (CBG information, for example, a CBGTI field) to schedule the CBG retransmission via the PDSCH by way of the DCI.

The CBG information may be, for example, a bitmap in which each bit corresponds to one CBG. A size of the bitmap (the number of bits) may be determined based on at least one of the maximum number of CBGs per one TB, the number of TBs (CWs) transmitted at one transmission occasion, and the number of HARQ processes transmitted at one transmission occasion.

The DCI may be CRC-scrambled with a given RNTI (for example, CS-RNTI) different from a dynamic grant. The DCI may be, for example, DCI format 0_1.

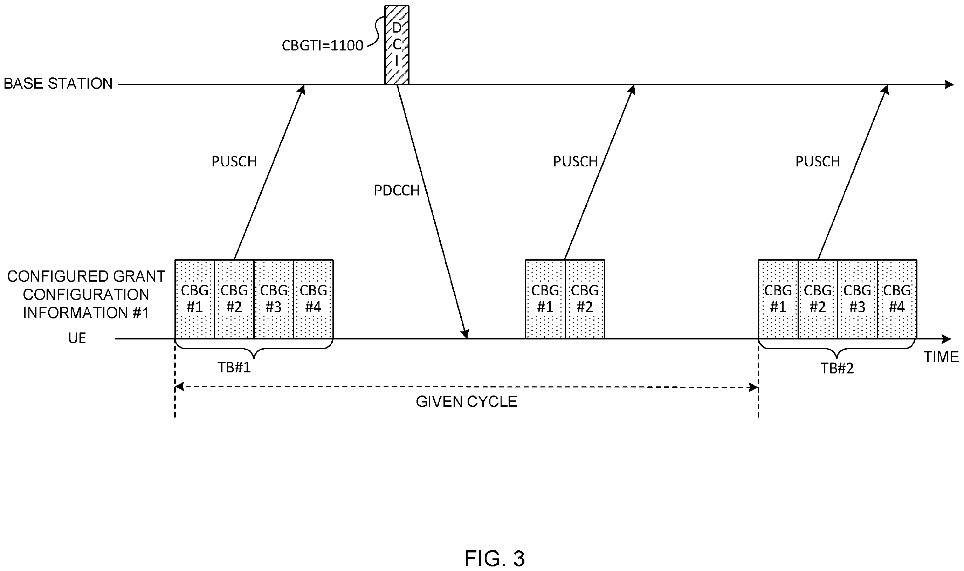

FIG. 3 is a diagram to show an example of the CBG based retransmission according to the second aspect. In FIG. 3, it is assumed that a PUSCH transmission in a given cycle is configured by configured grant configuration information #1. In FIG. 3, it is assumed that the PUSCH transmission in the given cycle is activated by way of the DCI for activation.

Note that in a case that the DCI CRC-scrambled with the given RNTI (for example, CS-RNTI) satisfies a given condition, the UE may recognize the DCI (for example, DCI format 0_1) as the DCI for activation and start the reception of the PDSCH in the given cycle using a time domain resource and frequency domain resource specified by the DCI. The given condition may be the following, for example.
- A NDI field in the DCI is 0,
- All bits of an HPN field in the DCI are 0, and
- All bits of an RV field in the DCI are 0.

For example, FIG. 3 shows an example in which the number of CBGs per one TB is configured to 4. Note that FIG. 3 is merely an example, and the number of CBGs per one TB, the number of TBs per one transmission occasion, and the like are not limited to those shown in the figure.

For example, in FIG. 3, the UE transmits TB #1 including CBGs #1 to #4 at a given transmission occasion via a PUSCH. The base station schedules a retransmission of at least one of CBGs #1 to #4, based on results of decoding CBGs #1 to #4, respectively.

For example, in FIG. 3, the base station fails to decode CBGs #1 and #2, and successfully decodes CBGs #3 and #4. Thus, the base station may transmit DCI scheduling retransmissions of CBGs #1 and #2 via a PDCCH. The DCI may be CRC-scrambled with a given RNTI (for example, CS-RNTI).

The UE may monitor a given search space set to detect the DCI CRC-scrambled with the given RNTI (for example, CS-RNTI) (for example, DCI format 0_1).

The given search space set may include one or more search spaces. The given search space set may be at least one of a CSS set and a USS set.

A value of a given field in the DCI (for example, a CBGTI field) may indicate a CBG to be retransmitted in TB #1. For example, in FIG. 3, the given field is a four-bit bitmap "1100" corresponding to four CBGs #1 to #4 in TB #1. For example, a value "1" of a bit in the bitmap may indicate that the CBG corresponding to the bit is transmitted. On the other hand, a value "0" of the bit may indicate that the CBG corresponding to the bit is not transmitted.

The DCI may be CRC-scrambled with an RNTI (for example, CS-RNTI) the same as for the DCI for activation. In this case, the UE may recognize the DCI as DCI scheduling retransmissions of one or more CBGs (in other words, as being different from the DCI for activation), based on values of one or more given fields in the DCI (for example, values of the NDI field, the HPN field, and the RV field).

The value (HPN) of the HPN field in the DCI scheduling the retransmissions of one or more CBGs may indicate an HPN the same as that at the initial transmission. The value of the RV field in the DCI indicates an RV applied to the CBG to be retransmitted, and at least one bit of the RV field may be set to other than 0. A value of at least one bit of the NDI field in the DCI may be set to other than 0.

In FIG. 3, the UE may retransmit CBGs #1 and #2 in TB #1, based on a value "1100" of the CBGTI field in the DCI.

In a case of not detecting DCI scheduling the retransmissions of CBGs #1 and #2 even if the above given timer expires, the UE may recognize that TB #1 including CBGs #1 to #4 is correctively decoded by the base station.

As shown in FIG. 3, in a case that all CBGs #1 to #4 in TB #1 are correctively received until the next transmission occasion, the base station may perform an initial transmission of TB #2 different from TB #1 at the next transmission occasion by using the HARQ process the same as that at the previous transmission occasion.

Note that in a case that all CBGs #1 to #4 in TB #1 are not correctively received until the next transmission occasion, the base station may perform an initial transmission of TB #2 different from TB #1 at the next transmission occasion by using the HARQ process different from that at the previous transmission occasion.

Alternatively, an HARQ process ID of data to be transmitted may be determined based on time information of configured grant PUSCH transmission occasion (for example, one or more pieces of information of a symbol index, a slot number in a frame, a subframe number in a frame, and a frame number). The HARQ process ID assigned at the next transmission occasion is determined based on the time information of the next transmission occasion.

According to the second aspect described above, the retransmission based on a unit (for example, CBG) smaller than a TB for the configured grant PUSCH can be appropriately controlled.

### <Other Aspects>

The above first and second aspects describe the examples in which the activation or the release is controlled by the DCI, but the disclosure is not limited to these examples. In the first and second aspects, the activation may be performed through the configuration information (the SPS configuration information or the configured grant configuration information), and the activation or the release may not be controlled by the DCI.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

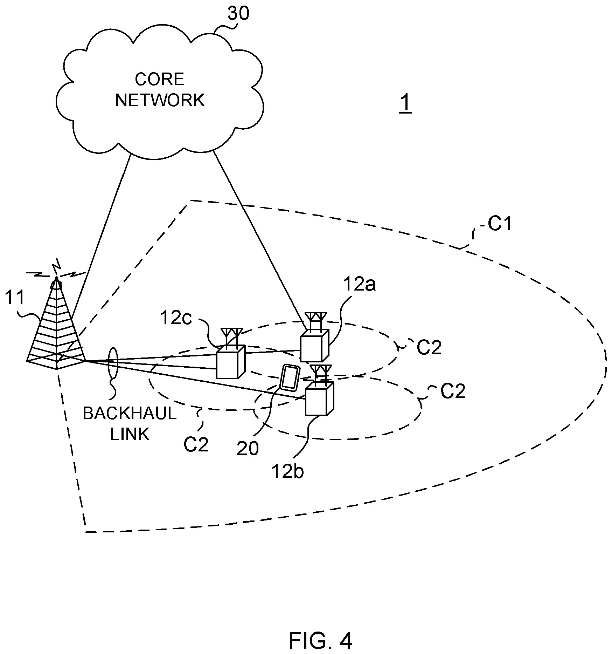

FIG. 4 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

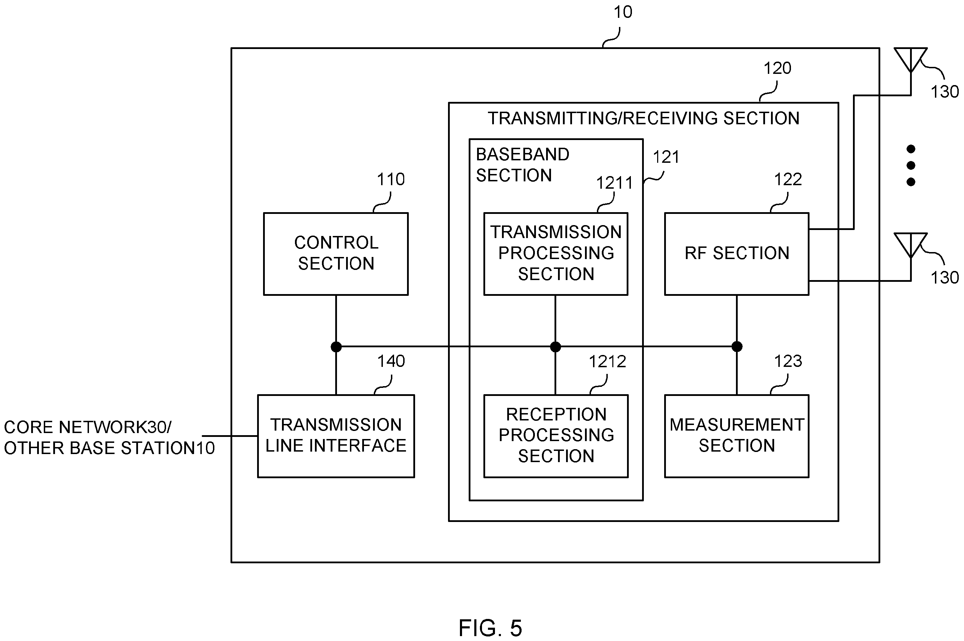

FIG. 5 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit configuration information for a SPS PDSCH or configured grant PUSCH (configuration information indicating a given cycle, for example, SPS configuration information or configured grant configuration information). The transmitting/receiving section 120 may receive the PDSCH (downlink shared channel) in a given cycle configured by the above configuration information, or transmit downlink control information used to activate or release the PUSCH (uplink shared channel).

The transmitting/receiving section 120 may transmit a transport block including a plurality of code block groups (CBGs) at a given occasion in a given cycle by using a PDSCH (the first aspect).

The control section 110 may control transmission of at least one CBG to be re-scheduled among the plurality of CBGs independently from the given occasion in a case that downlink control information including a given field value indicating the at least one CBG is detected (the first aspect).

The control section 110 may control receptions of a plurality of pieces of transmission confirmation information respectively corresponding to the plurality of CBGs (the first aspect). The control section 110 may control the receptions of the plurality of pieces of transmission confirmation information using a first type codebook a size of which is semi-statically determined, or a second type codebook a size of which is dynamically determined.

The control section 110 may control transmission of the TB, based on the downlink control information activating the configuration information, or without the downlink control information.

The transmitting/receiving section 120 may receive a transport block including a plurality of code block groups (CBGs) at a given occasion in a given cycle by using a PUSCH (the second aspect).

The control section 110 may control transmission of downlink control information including a given field value indicating at least one CBG to be re-scheduled of the plurality of CBGs (the second aspect).

The control section 110 may control reception of the TB, based on the downlink control information activating the configuration information, or without the downlink control information.

### (User Terminal)

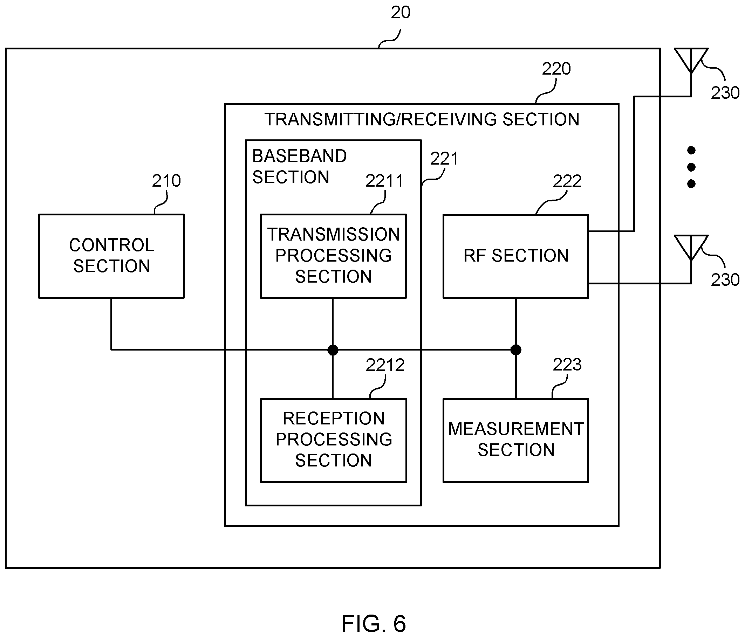

FIG. 6 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

Note that the transmitting/receiving section 220 may receive configuration information for a SPS PDSCH or configured grant PUSCH (configuration information indicating a given cycle, for example, SPS configuration information or configured grant configuration information). The transmitting/receiving section 220 may receive the PDSCH (downlink shared channel) in a given cycle configured by the above configuration information, or receive downlink control information used to activate or release the PUSCH (uplink shared channel).

The transmitting/receiving section 220 may receive a transport block including a plurality of code block groups (CBGs) at a given occasion in a given cycle by using a PDSCH (the first aspect).

The control section 210 may control reception of at least one CBG to be re-scheduled among the plurality of CBGs independently from the given occasion in a case that downlink control information including a given field value indicating the at least one CBG is detected (the first aspect).

The control section 210 may control transmissions of a plurality of pieces of transmission confirmation information respectively corresponding to the plurality of CBGs (the first aspect). The control section 210 may control the transmissions of the plurality of pieces of transmission confirmation information using a first type codebook a size of which is semi-statically determined, or a second type codebook a size of which is dynamically determined.

The control section 210 may control reception of the TB based on the downlink control information activating the configuration information, or without the downlink control information.

The transmitting/receiving section 220 may transmit a transport block including a plurality of code block groups (CBGs) at a given occasion in a given cycle by using a PUSCH (the second aspect).

The control section 210 may control retransmission of at least one CBG to be re-scheduled among the plurality of CBGs independently from the given occasion in a case that downlink control information including a given field value indicating the at least one CBG is detected (the second aspect).

The control section 210 may control transmission of the TB, based on the downlink control information activating the configuration information, or without the downlink control information.

The control section 210 may control monitoring of the downlink control information that is CRC-scrambled with a given RNTI (for example, CS-RNTI) in a given search space set.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

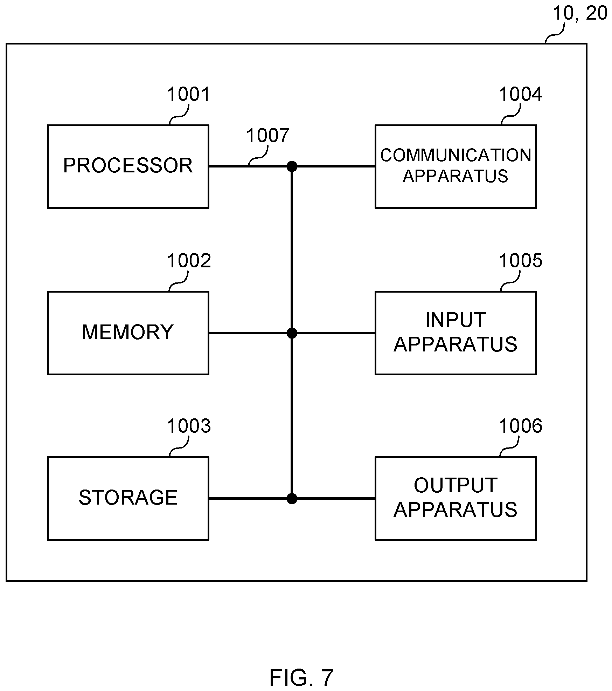

For example, a base station, a user terminal, and so on according to one embodiment of the present disclosure may function as a computer that executes the processes of the radio communication method of the present disclosure. FIG. 7 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a transmitting/receiving section that receives or transmits a transport block including a plurality of code block groups (CBGs) at a given occasion in a given cycle by using a downlink shared channel or an uplink shared channel; and
a control section that controls reception or retransmission of at least one CBG to be re-scheduled among the plurality of CBGs independently from the given occasion, in a case that downlink control information including a given field value indicating the at least one CBG is detected.

2. The user terminal according to claim 1, wherein
the control section controls transmissions of a plurality of pieces of transmission confirmation information respectively corresponding to the plurality of CBGs.

3. The user terminal according to claim 2, wherein
the control section controls the transmissions of the plurality of pieces of transmission confirmation information using a first type codebook a size of which is semi-statically determined, or a second type codebook a size of which is dynamically determined.

4. The user terminal according to any one of claims 1 to 3, wherein
the downlink control information is cyclic redundancy check (CRC)-scrambled with a configured scheduling (CS)-radio network temporary identifier (RTNI).

5. The user terminal according to any one of claims 1 to 4, wherein
the transmitting/receiving section receives configuration information including information indicating the given cycle, and
the control section controls reception or transmission of the TB, based on the downlink control information activating the configuration information, or without the downlink control information.

6. A radio communication method of a user terminal, the radio communication method comprising:
receiving or transmitting a transport block including a plurality of code block groups (CBGs) at a given occasion in a given cycle by using a downlink shared channel or an uplink shared channel; and
controlling reception or retransmission of at least one CBG to be re-scheduled among the plurality of CBGs independently from the given occasion, in a case that downlink control information including a given field value indicating the at least one CBG is detected.
